# EUROPÄISCHE PATENTANMELDUNG

(11) **EP 1 367 207 A2**
(43) Veröffentlichungstag der Anmeldung: **03.12.2003**
(21) Anmeldenummer: 03011178.5
(22) Anmeldetag: 27.05.2003
(51) Int. Cl.: E05F 11/53, B60J 7/057

(54) **Antriebsvorrichtung, insbesondere für einen Fahrzeugschiebedachdeckel, sowie Fahrzeugschiebedach**

(30) Priorität: 31.05.2002 DE 10224157
(71) Anmelder: ArvinMeritor GmbH, 63128 Dietzenbach (DE)
(72) Erfinder: Böhm, Horst, 60599 Frankfurt/Main (DE); Grimm, Rainer, 60599 Frankfurt/Main (DE)
(74) Vertreter: Kitzhofer, Thomas, Dipl.-Ing.

(57) **Zusammenfassung**

Eine Antriebsvorrichtung, insbesondere ein Seilantrieb für ein an einem Fahrzeug angebrachtes, zu bewegendes Teil, insbesondere für einen Deckel (10) eines Fahrzeugschiebedachs hat ein Seil (18), welches mit seinen Enden auf zwei gleichsinnig angetriebene Wickeltrommeln (34, 38) aufgewickelt ist. Ein Zwischenabschnitt des Seils (18) umschlingt eine weitere Wickeltrommel (36) und teilt dadurch das in einer Endlosschleife geführte Seil (18) in zwei Stränge, an denen Mitnehmer (50, 52) zum Angriff an das zu bewegende Teil vorgesehen sind.

## Beschreibung

Die Erfindung betrifft eine Antriebsvorrichtung, insbesondere einen Seilantrieb für ein an einem Fahrzeug angebrachtes, relativ zu ihm zu bewegendes Teil, mit wenigstens einem flexiblen, in Form einer Endlosschleife geführten Zugübertragungsmittel, das zwei Enden hat, wobei jedem Ende eine Wickeltrommel zugeordnet ist, auf die und von der das Zugübertragungsmittel aufgewickelt bzw. abgewickelt werden kann, einem gemeinsamen motorischen Antrieb zum Drehen der Wickeltrommeln in dieselbe Drehrichtung und an dem Zugübertragungsmittel angebrachten Mitnehmern zur Verbindung mit dem bewegten Teil.

Eine derartige Antriebsvorrichtung zum Heben und Senken einer Fahrzeugscheibe ist beispielsweise aus der JP 62-15 34 80, der DE 197 38 795 C1 oder der WO 00/35 695 bekannt.

Das Prinzip dieser Antriebsvorrichtungen besteht darin, zwei Seilstränge mit parallelen Abschnitten zu bilden, die jeweils an parallelen seitlichen Rändern der Fahrzeugscheibe angreifen und die synchron auf- und abbewegt werden, um Kippbewegungen zu vermeiden. Das über zahlreiche Umlenkrollen geführte Seil hat eine erhebliche Seillänge, so daß es gerade aufgrund von Wärmedehnungen oder Abnutzung bzw. Seillängung zu unsychronen Bewegungen der Mitnehmer auf den Strängen kommen kann. Obwohl diese Bewegungsunterschiede sehr gering sind, können sie unter Umständen zu leichten, zu vermeidenden Kippbewegungen oder Schrägstellungen führen.

Aufgabe der Erfindung ist es, eine Antriebsvorrichtung, insbesondere einen Seilantrieb für den Deckel eines Fahrzeugschiebedachs (worunter natürlich auch alle sonst bekannten Arten wie ein Faltdach, ein Hubdach oder ein Schiebehebedach fallen) zu schaffen, bei dem die Gefahr von unsynchronisierten Bewegungen der Mitnehmer weiter reduziert ist.

Diese Aufgabe wird bei einer Antriebsvorrichtung der eingangs genannten Art dadurch gelöst, daß wenigstens eine weitere, mit dem Antrieb gekoppelte Wickeltrommel vorgesehen ist, die von einem Zwischenabschnitt des Zugübertragungsmittels, zwischen den Enden umschlungen ist, so daß zwischen den Wickeltrommeln und der weiteren Wickeltrommel wenigstens zwei Stränge des Zugübertragungsmittels gebildet sind, an denen die Mitnehmer befestigt sind.

Auf die weitere Wickeltrommel ist ein kurzer, vorzugsweise mittlerer Abschnitt des Zugübertragungsmittels aufgewickelt, so daß die freie Länge des Zugübertragungsmittels, also diejenige Länge, die zwischen zwei angetriebenen Wickeltrommeln liegt, halbiert wird. Der Hauptgrund, warum aufgrund der weiteren Wickeltrommel eine synchrone Antriebsbewegung erzielt wird, besteht darin, daß bei nur zwei Wickeltrommeln ungleiche Seillängen zwischen den Mitnehmern und den aufgewickelten Enden vorhanden sind. Dies führt insbesondere bei Wärmedehnungen zu einem kleinen Versatz der Mitnehmer, der zum Verkanten des zu bewegenden Teils führen kann. Durch Aufteilung des Zugübertragungsmittels in zwei Stränge werden gleiche Längenabschnitte des Zugübertragungsmittels zu dem Mitnehmer in jedem Strang geschaffen, wodurch ein Versatz der Mitnehmer ausgeschlossen ist. Der Aufwand für die weitere Wickeltrommel ist nicht sonderlich hoch, denn auch sie wird vom Antrieb für die ohnehin vorgesehenen Wickeltrommeln bewegt.

Durch die Erfindung wird eine Antriebsvorrichtung geschaffen, bei der die Schrägstellungen des zu bewegenden Teils vermieden werden, weshalb auch die Herstellungstoleranzen für die verwendeten Bauteile größer gewählt werden können, was die Vorrichtung kostengünstiger macht.

Zu betonen ist, daß natürlich auch mehr als zwei Stränge gebildet werden können, z.B. durch Vorsehen weiterer, also zwischengeschalteter Wickeltrommeln, so daß auch Mitnehmer in mehr als zwei Strängen synchron angetrieben werden können.

Die Wickeltrommeln für die Enden und die weitere Wickeltrommel sind bevorzugt auf der Drehachse des Antriebs angeordnet, somit auch koaxial zueinander positioniert. Dies schafft eine kompakte Konstruktion. Ferner wird von den Enden aus Zugübertragungsmittel in entgegengesetzten Wickelrichtungen auf die Wickeltrommeln auf- und abgewickelt.

Bei Abnutzung oder bei Dehnung des Zugübertragungsmittels muß vermieden werden, daß es seine Vorspannung verliert. Deshalb ist bei der bevorzugten Ausführungsform wenigstens ein Spannelement zum permanenten Vorspannen des Zugübertragungsmittels vorgesehen.

Dieses Spannelement besteht insbesondere aus einer Feder, die an den Wickeltrommeln angreift und die bestrebt ist, die Wickeltrommeln, an denen sie angreift, gegeneinander und in die den Trommeln zugeordnete Aufwickelrichtung zu verdrehen. Damit wird verhindert, daß bei Verwendung eines Seils eine sogenannte Seillose entstehen kann.

Die weitere Wickeltrommel kann in axialer Richtung zwischen den Wickeltrommeln für die Aufnahme der Enden sitzen.

Obwohl zuvor von wenigstens einem flexiblen Zugübertragungsmittel die Rede war, muß betont werden, daß nicht unbedingt ein durchgehendes Zugübertragungsmittel vorgesehen sein muß. Beispielsweise könnte das Zugübertragungsmittel mittig getrennt sein, wobei die Enden an der Trennstelle an der weiteren Wickeltrommel befestigt und dort aufgewickelt sind. Es entstehen dadurch zwei Zugübertragungsmittel. Selbstverständlich können insbesondere bei Vorsehen von zusätzlichen weiteren Wickeltrommeln auch mehr als zwei Zugübertragungsmittel verwendet werden.

Es ist vorgesehen, daß mehrere Umlenkrollen zur Umlenkung des Zugübertragungsmittels im Bereich der Stränge vorgesehen sind, die wenigstens einen Abschnitt des Zugübertragungsmittels definieren, welcher parallel zu einem entsprechenden Abschnitt des anderen Strangs ist, wobei die Mitnehmer im Bereich der parallelen Abschnitte vorgesehen sind.

Gemäß der bevorzugten Ausführungsform ist das flexible Zugübertragungsmittel in Form eines eckigen "U" zu einer Endlosschleife geführt, wobei die Mitnehmer an den Schenkeln des "U" und der Antrieb etwa in der Mitte des Verbindungsstegs des "U" angeordnet sind.

Die Erfindung schafft darüber hinaus ein Fahrzeugschiebedach mit einem Deckel und einer Antriebsvorrichtung nach der Erfindung, deren Mitnehmer am Deckel angreifen, oder, allgemeiner, mit dem Deckel gekoppelt sind.

Darüber hinaus kann die erfindungsgemäße Antriebsvorrichtung jedoch auch z. B. als Antrieb der Scheiben des Fahrzeugs vorgesehen sein.

Das Zugübertragungsmittel ist bevorzugt ein flexibles Seil, es wäre jedoch auch möglich, ein Band vorzusehen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine vereinfachte Perspektivansicht des erfindungsgemäßen Fahrzeugschiebedachs mit der erfindungsgemäßen Antriebsvorrichtung,
- Figur 2 eine Draufsicht auf den in Fahrtrichtung vorderen Teil des Rahmens des erfindungsgemäßen Fahrzeugschiebedachs mit einem Teil der erfindungsgemäßen Antriebsvorrichtung,
- Figur 3 einen Teil der erfindungsgemäßen Antriebsvorrichtung in Explosionsansicht und
- Figur 4 eine Seitenansicht des Antriebs mit den Wickeltrommeln als Teil der erfindungsgemäßen Antriebsvorrichtung.

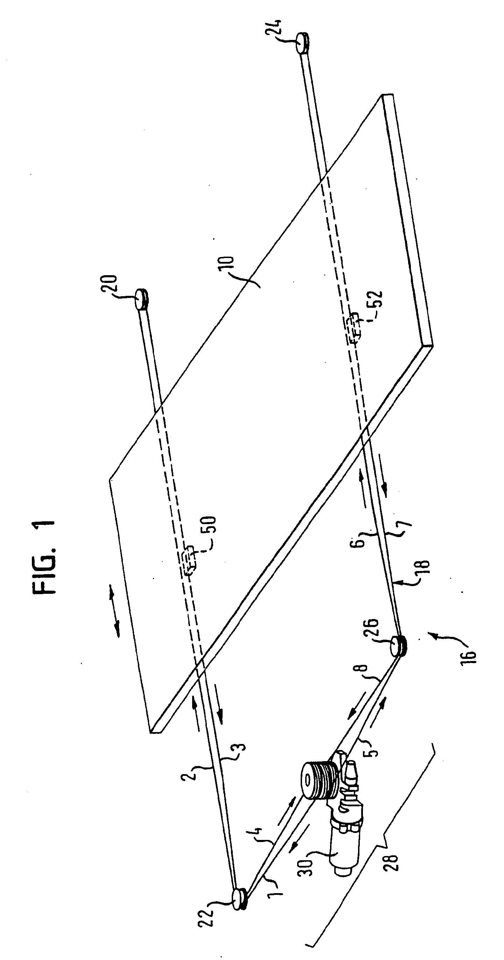

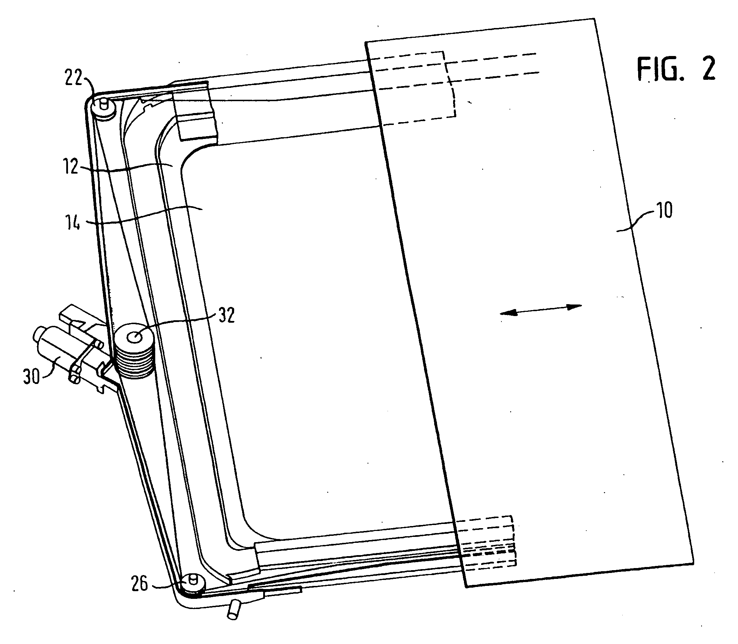

In Figur 1 ist sehr vereinfacht ein Fahrzeugschiebedach dargestellt, das einen Deckel 10 aufweist, der in Fahrzeuglängsrichtung verfahrbar ist. Vorzugsweise ist der Deckel 10 auch noch ausstellbar. Ein in Figur 2 dargestellter Rahmen 12 umgibt die Dachöffnung 14, die vom Deckel 10 verschlossen wird, und nimmt eine Antriebsvorrichtung 16 auf, welche in Figur 1 ebenfalls zu sehen ist. Die Antriebsvorrichtung samt Rahmen 12 und Deckel 10 kann von einem Automobilzulieferer als Kompletteinheit zum Einbau in das Fahrzeug angeliefert werden.

Die Antriebsvorrichtung ist in Form eines Seilantriebs ausgeführt.

Ein flexibles Zugübertragungsmittel in Form eines Seils 18 verläuft in Form eines eckigen "U", und zwar in einer Endlosschleife. Die zwei parallelen Schenkel des "U" verlaufen parallel zur Fahrzeuglängsrichtung und an den seitlichen Rändern des Deckels 10 im rinnenförmigen Rahmen 12. Das "U" wird durch Umlenkrollen 20, 22, 24 und 26 für das Seil 18 definiert. In Fahrzeuglängsrichtung gesehen bilden die Umlenkrollen 20, 22 die rechte hintere bzw. rechte vordere Umlenkrolle, wohingegen die Umlenkrollen 24, 26 die linke hintere bzw. linke vordere Umlenkrolle bilden. In der Mitte des Mittelteils 28 des "U" ist ein elektromotorischer Antrieb 30 positioniert. Dieser treibt eine aufwärts gerichtete Antriebswelle 32 an. Auf der Antriebswelle 32 sitzen axial nacheinander drei Wickeltrommeln, nämlich eine untere Wickeltrommel 34, eine mittlere oder weitere Wickeltrommel 36 und eine obere Wickeltrommel 38. Die Wickeltrommeln 34, 38 sind ferner drehfest mit der Antriebswelle 32 verbunden.

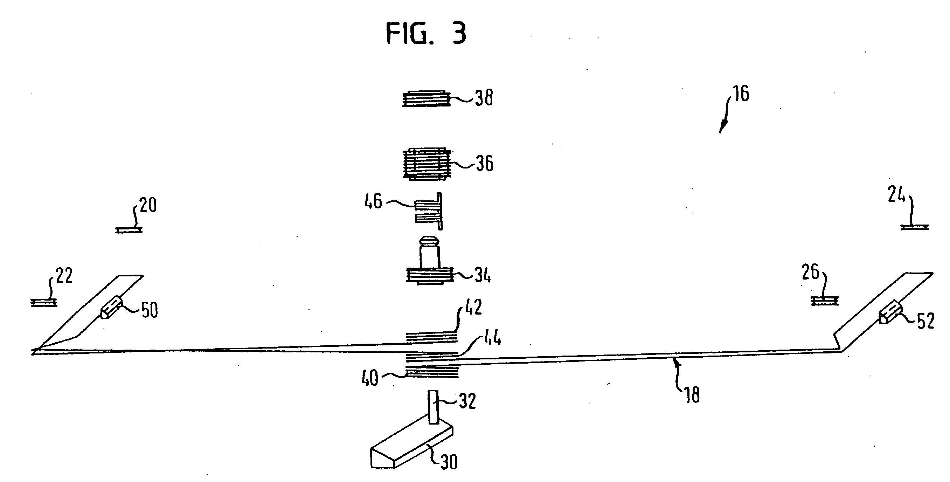

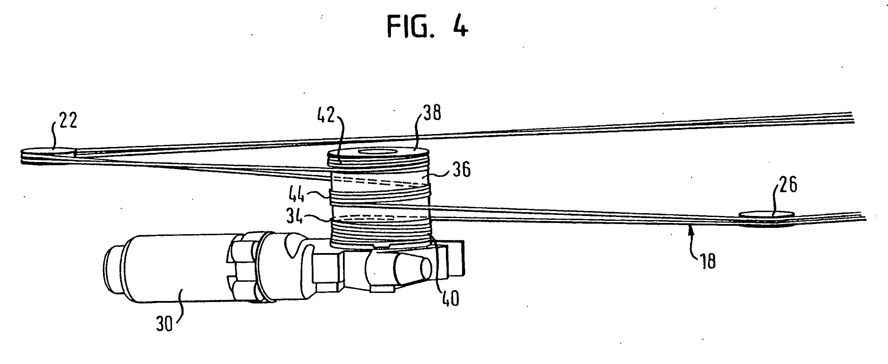

Das Seil 18 hat zwei Enden 40, 42, die in mehreren Windungen auf die untere Wickeltrommel 34 bzw. obere Wickeltrommel 38 aufgewickelt sind. Diese Windungen sind in Figur 3 zu erkennen. Die Enden 40, 42 sind dabei in entgegengesetzten Richtungen auf die zugeordneten Wickeltrommeln 34, 38 aufgewickelt (siehe Figuren 2 und 4). Ein Zwischenabschnitt 44, genauer gesagt ein kurzer, mittlerer Abschnitt des Seils 18 ist mehrfach um die mittlere Wickeltrommel 36 geschlungen und an ihr zusätzlich arretiert.

Ein Spannelement in Form einer Feder 46 ragt durch die mittlere Wickeltrommel 36 und greift an ihr sowie der unteren Wickeltrommel 34 an und ist bestrebt, die Wickeltrommel 36 gegen die Wickeltrommeln 34, 38 in ihre Aufwickelrichtung zu drehen oder , allgemeiner, die Wickeltrommeln 34, 36, 38 gegeneinander und in ihre Aufwickelrichtungen zu drehen. Damit spannt die Feder 46 das Seil 18 permanent vor. Die Feder sorgt aber auch für die Drehmitnahme der Wickeltrommel 36. Alternativ könnte aber auch die mittlere Wickeltrommel 36 direkt angetrieben werden, und die anderen Wickeltrommeln 34, 38 wären über die Feder mit dem Antrieb gekoppelt.

Die mittlere Wickeltrommel 36 unterteilt das Seil 18 in zwei gleich lange Stränge, nämlich einen linken und einen rechten Strang. Der linke Strang beginnt mit dem Ende 42 auf der oberen Wickeltrommel 38 und erstreckt sich bis zur Umlenkrolle 22. Dieser Abschnitt ist mit 1 bezeichnet. Auf den Abschnitt 1 folgt der Abschnitt 2, der sich von der Umlenkrolle 22 zur Umlenkrolle 20 erstreckt. Diesem folgt der Abschnitt 3 zurück zur Umlenkrolle 22 und der Abschnitt 4 zur mittleren Wickeltrommel. Nach einigen Umschlingungen folgt der Abschnitt 5, der bis zur Umlenkrolle 26 verläuft, der Abschnitt 6 bis zur Umlenkrolle 24, der Abschnitt 7 zurück zur Umlenkrolle 26 und der Abschnitt 8, der bis zum Ende 40 verläuft.

An den Abschnitten 3 und 7 ist jeweils ein Mitnehmer 50, 52 fest am Seil 18 angebracht, wobei die Mitnehmer 50, 52 mit der Unterseite des Deckels 10 gekoppelt sind und die Verbindung zwischen der Antriebsvorrichtung und dem Deckel 10 darstellen. Wie aus den Pfeilen in Figur 1 zu erkennen ist, bewegen sich die Abschnitte 3, 7 und damit die Mitnehmer 50, 52 synchron und in gleicher Richtung, wenn die Antriebswelle 32 gedreht wird. In einer Drehrichtung wird der Deckel 10 nach hinten, in der Gegenrichtung nach vorn verfahren. Anhand von Figur 1 ist auch nachvollziehbar, daß die Aufteilung des Seils 18 durch die mittlere Wickeltrommel 36 in gleiche Seillängenabschnitte zu gleichen Abständen der Mitnehmer 50, 52 zu ihren entsprechenden Seilenden führt.

Anstatt des Seils 18 kann auch ein anderes flexibles Zugübertragungsmittel, beispielsweise ein Band oder dergleichen eingesetzt sein. Darüber hinaus können selbstverständlich auch mehrere Mitnehmer 50, 52 an jedem Strang vorgesehen sein.

## Patentansprüche

1. Antriebsvorrichtung, insbesondere Seilantrieb für ein an einem Fahrzeug angebrachtes, relativ zu ihm zu bewegendes Teil, mit
wenigstens einem flexiblen, in Form einer Endlosschleife geführten Zugübertragungsmittel, das zwei Enden (40, 42) hat,
wobei jedem Ende (40, 42) eine Wickeltrommel (34, 38) zugeordnet ist, auf die und von der das Ende (40, 42) des Zugübertragungsmittels aufgewickelt bzw. abgewickelt werden kann,
mit einem gemeinsamen, motorischen Antrieb (30) zum Drehen der Wickeltrommeln (34, 38) in dieselbe Drehrichtung,
und mit an dem Zugübertragungsmittel angebrachten Mitnehmern (50, 52) zur Verbindung mit dem zu bewegenden Teil,
**dadurch gekennzeichnet, daß**
wenigstens eine weitere, mit dem Antrieb (30) gekoppelte Wickeltrommel (36) vorgesehen ist, die von einem Zwischenabschnitt (44) des Zugübertragungsmittels, zwischen den Enden (40, 42) umschlungen ist, so daß zwischen den Wickeltrommeln (34, 38) und der weiteren Wickeltrommel (36) wenigstens zwei Stränge des Zugübertragungsmittels gebildet sind, an denen die Mitnehmer (50, 52) befestigt sind.

2. Antriebsvorrichtung nach Anspruch 1, **dadurch gekennzeichnet, daß** die Wickeltrommeln (34, 36, 38) auf einer Antriebswelle (32) des Antriebs (30) sitzen.

3. Antriebsvorrichtung nach Anspruch 1 oder 2, **gekennzeichnet durch** wenigstens ein Spannelement zum permanenten Vorspannen des Zugübertragungsmittels.

4. Antriebsvorrichtung nach Anspruch 3, **dadurch gekennzeichnet, daß** das Spannelement eine Feder (46) ist, die an den Wickeltrommeln (34, 36, 38) angreift und die bestrebt ist, diese Wickeltrommeln (34, 36, 38) gegeneinander und in die ihnen zugeordnete Aufwickelrichtung zu verdrehen.

5. Antriebsvorrichtung nach einem der vorhergehenden Ansprüche, **dadurch gekennzeichnet, daß** die weitere Wickeltrommel (36) in axialer Richtung zwischen den den Enden (40, 42) zugeordneten Wickeltrommeln (34, 38) sitzt.

6. Antriebsvorrichtung nach einem der vorhergehenden Ansprüche, **dadurch gekennzeichnet, daß** das Zugübertragungsmittel aus zwei getrennten Teilen besteht, die jeweils ein Ende haben, welches an der zusätzlichen Wickeltrommel (36) befestigt und auf sie aufgewickelt ist.

7. Antriebsvorrichtung nach einem der vorhergehenden Ansprüche, **gekennzeichnet durch** Umlenkrollen (20, 22, 24, 26) zur Umlenkung des Zugübertragungsmittels im Bereich der Stränge, die wenigstens einen Abschnitt (2, 3) des Zugübertragungsmittels definieren, welcher parallel zu einem entsprechenden Abschnitt (6, 7) des anderen Stranges ist, wobei die Mitnehmer (50, 52) an den parallelen Abschnitten (2, 3, 6, 7) vorgesehen sind.

8. Antriebsvorrichtung nach einem der vorhergehenden Ansprüche, **dadurch gekennzeichnet, daß** das Zugübertragungsmittel in Form eines eckigen "U" verläuft und die Mitnehmer (50, 52) an parallelen Schenkeln des "U" und der Antrieb (30) etwa in der Mitte des Mittelteils (28) angeordnet sind.

9. Antriebsvorrichtung nach einem der vorhergehenden Ansprüche, **dadurch gekennzeichnet, daß** von den Enden (40, 42) aus das Zugübertragungsmittel in entgegengesetzten Wickelrichtungen auf die Wickeltrommeln (34, 38) auf- und abgewickelt wird.

10. Fahrzeugschiebedach mit einem Deckel (10) und einer Antriebsvorrichtung nach einem der vorhergehenden Ansprüche, wobei die Mitnehmer (50, 52) am Deckel (10) angreifen.
